# EUROPEAN PATENT APPLICATION

(11) **EP 2 075 772 A2**
(43) Date of publication of application: **01.07.2009**
(21) Application number: 08172955.0
(22) Date of filing: 26.12.2008
(51) Int. Cl.: G07G 1/00, G07G 1/14

(54) **Commodity sales processing system**

(30) Priority: 28.12.2007 JP 2007340912
(71) Applicant: Teraoka Seiko Co., Ltd., Tokyo (JP)
(72) Inventor: Mori, Takashi, Tokyo (JP); Sato, Naokazu, Tokyo (JP)
(74) Representative: Leszczynski, André

(57) **Abstract**

A commodity sales processing system in which when a handy terminal receives membership number data that is sent from a membership card reader in the case of a valid membership card, the handy terminal transmits an optical signal (lock release signal), and a customer cradle receives the lock release signal from the handy terminal and releases the lock of the handy terminal.

## Description

### BACKGROUND OF THE INVENTION

### Field of the Invention

The present invention relates to a commodity sales processing system particularly in which a customer himself reads commodity codes with a predetermined terminal and performs settlement using that terminal.

### Description of Related Art

As a commodity sales processing system that performs registration and settlement of commodities to be purchased by a customer at a retail outlet such as a supermarket, there has been proposed a commodity sales processing system called a self-scanning system in which a membership card or the like is read with a card reading device to designate one from a plurality of portable terminals that are prepared, with the customer himself then performing registration of the commodities to be purchased using the designated portable terminal and then bringing the personal terminal to a register to perform payment settlement. Also, Japanese Unexamined Patent Application No. H10-241045 discloses technology in which the aforementioned plurality of portable terminals are housed in individual housing devices, and when one portable terminal is designated by the reading of the membership card, the customer is informed which portable terminal may be used by opening the cover of the corresponding housing device and turning on a lamp.

In the aforementioned conventional commodity sales processing system, when designating a portable terminal that the customer is to use, the housing device that houses the portable terminal needs to perform communication with the card reading device that reads the membership card or a higher-ranking control device in order to receive the instruction of which portable terminal the customer should be allowed to use. Accordingly, since it is necessary to incorporate a function that performs communication with the card reading device or control device in all of the housing devices that are provided, the problem arises of the cost increasing by that amount.

### SUMMARY OF THE INVENTION

The present invention was achieved in view of the above circumstances, and has as its object to provide a commodity sales processing system that can put one portable terminal to be used by the customer for commodity registration in a state in which it may be taken out from the housing device without imparting a communication function in the housing device that individually stores the portable terminal.

The present invention provides a commodity sales processing system in which a customer operates a portable terminal at a commodity display place to read out and store commodity codes and settlement is performed at a cash register based on this stored data, including: the portable terminal; a housing device that houses the portable terminal; an operation part that is capable of communicating with the portable terminal and is controlled to take out the portable terminal that is housed in the housing device; and a sending unit that sends a confirmation signal to the portable terminal that is housed in the housing device in the case of the operation part being operated; in which, the portable terminal is provided with a signal transmission unit that transmits a lock release signal upon receiving the confirmation signal from the sending unit; and the housing device is provided with a lock unit that prevents removal of the portable terminal in the mounted state; a receiving unit that receives the lock release signal from the portable terminal that is prevented from being removed by the lock unit; and a lock release unit that releases the lock unit upon receiving the lock release signal from the receiving unit.

According to the present invention, since the portable terminal receives a confirmation signal that is sent from the sending unit when the operation part is operated, the portable terminal transmits a lock release signal upon receiving the confirmation signal, and the housing device releases the lock of the portable terminal upon receiving the lock release signal from the portable terminal, it is possible to put the portable terminal in a state in which it can be taken out without the housing device communicating with the card reading device or a control device. Accordingly, since there is no need to incorporate a communication function with the card reading device or control device, it is possible to lower the cost of the commodity sales processing system.

Also, in the aforementioned commodity sales processing system of the present invention, the portable terminal is provided with a code reading portion that shines a light on the code attached to a commodity and reads the code by the reflected light, and the signal transmission unit transmits the lock release signal by light that is emitted from the code reading portion.

According to the present invention, since the portable terminal transmits the lock release signal by the same optical signal as when reading commodity codes using the code reading portion for reading commodity codes that the portable terminal originally has, a special component for emitting a lock release signal is not required, and so it is possible to lower the cost of the commodity sales processing system.

Also, in the aforementioned commodity sales processing system of the present invention, the lock unit is a cover that covers the portable terminal in the locked state and is biased so as to open in the released state.

According to the present invention, since when the lock is released the cover enters an opened state, it is easy to comprehend which portable terminal has become capable of being taken out.

According to the present invention, in the commodity sales processing system, it is possible to put one portable terminal to be used in a state of being able to be taken out from a housing device without incorporating a communication function in the housing devices that individually house the portable terminals that are provided for customers to use for commodity registration.

The above and other aspects of the present invention will become apparent upon consideration of the following detailed description of exemplary embodiment thereof, particularly when taken in conjunction with the accompanying drawings wherein like reference numerals in the various figures are utilized to designate like components.

### BRIEF DESCRIPTION OF THE DRAWINGS

FIG. 1 is a system configuration diagram of the commodity sales processing system according to one embodiment of the present invention.
FIG 2 is a block diagram that shows the constitution of the handy terminal in the commodity sales processing system of FIG 1.
FIG. 3 is a front side exterior view of the handy terminal of FIG. 2.
FIG. 4 is a back side exterior view of the handy terminal of FIG 2.
FIG. 5A is a perspective view illustrating the customer cradle in the commodity sales processing system of FIG 1.
FIG. 5B is a plane view illustrating the customer cradle of FIG. 5A.
FIG. 5C is a rear view illustrating the customer cradle of FIG. 5A.
FIG. 6 is a view illustrating an example of an elapsed time file.
FIG 7 is an example of a membership file.
FIG. 8 is a block diagram that shows the constitution of the membership card reader.
FIG. 9 is a flowchart that describes the operation of the commodity sales processing system of FIG. 1.

### DETAILED DESCRIPTION OF THE INVENTION

An embodiment of the present invention shall be described in detail below with reference to the drawings.

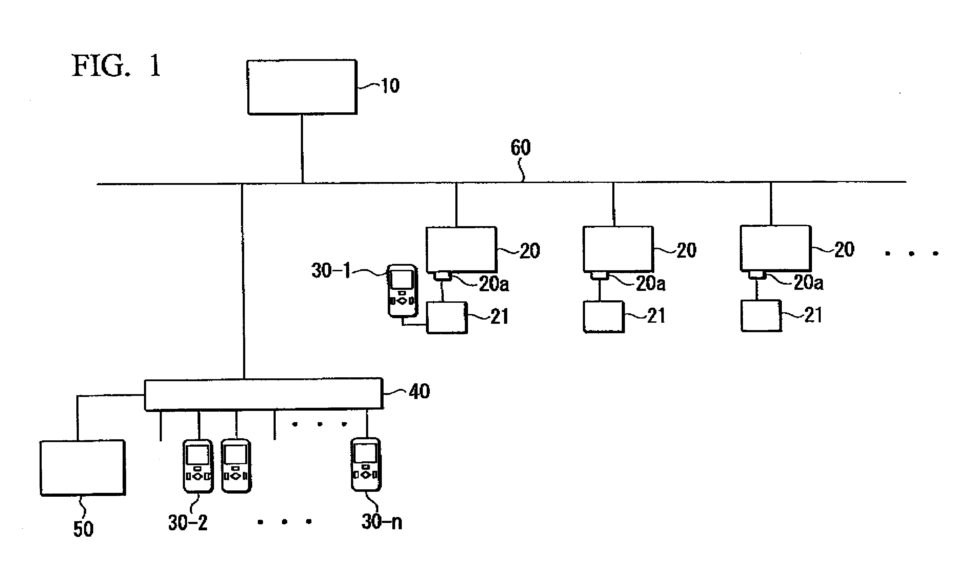

FIG. 1 is a drawing that shows the system configuration of the commodity sales processing system according to one embodiment of the present invention. In the same drawing, a store controller 10, a plurality of POS registers 20, n handy terminals 30-1 to 30-n (mobile terminals) that a customer uses for reading commodity codes, a register cradle 21 (repeater) that is connected by wire to each POS register 20 and in which the handy terminal is set during settlement of the commodities to be purchased, a customer cradle 40 in which a handy terminal is mounted when not used, and a membership card reader 50. Also, each POS register 20 and the customer cradle 40 is connected to the store controller 10 by a Local Area Network (LAN) 60.

Here, the store controller 10 and each POS register 20 are existing devices that construct this commodity sales processing system and have already been installed in a retail store, and therefore the present commodity sales processing system is constituted by additionally installing the register cradles 21, the handy terminals 30-1 to 30-n, the customer cradle 40, and the membership card reader 50.

The store controller 10 is a computer that performs control of various files and data such as a commodity file, membership file, sales performance file and the like. Here, the commodity file is a file that stores commodity information such as the name, code, and sales price of each commodity. The content thereof may be edited or changed as the need arises, and the latest commodity file is suitably sent to each POS register 20 and the customer cradle 40. Also, the membership file stores a list of customers registered as members of the retail store along with membership numbers and the like.

Also, the sales performance file is a file that is generated by totaling up the data of registration and settlement processing by each POS register 20.

The POS register 20 is a device for performing registration and settlement of commodities that a customer purchases, and is provided with various operation keys and a display portion. Originally connected to each POS register 20 by a predetermined cable is a barcode scanner (not illustrated) that reads commodity barcodes by the operation of a store clerk. This barcode scanner is disconnected, and after disconnection the register cradle 21 is connected instead to a connection connector 20a. This connection uses the same communication protocol, for example the RS-232 interface, that was used by the disconnected barcode scanner. Thereby, data communication is performed by RS-232C serial communication between the POS register 20 and the register cradle 21 and the handy terminal 30 described below that is mounted in the register cradle 21. The terminal on the register side of the register cradle 21 and the terminal on the handy terminal side are directly connected by signal lines.

In a retail store in which this commodity sales processing system has been installed, a customer cradle 40 and a member card reader 50 are installed near the entrance to the store. A plurality of unused handy terminals 30 set in the customer cradle 40 and provided for use by customers. When a customer passes his membership card through the membership card reader 50, one of the handy terminals 30 is put into a use-enabled state. The customer then removes that handy terminal 30 from the customer cradle 40 and commences shopping. The codes of the commodities that the customer desires to purchase are read by the handy terminal 30, after which the customer finally goes to the POS register 20 where the handy terminal 30 is set in the register cradle 21 (in FIG. 1, the handy terminal 30-1 is set).

Then, the commodity purchase information such as the aforementioned codes of the scanned commodities is sent from the handy terminal 30 to the POS register 20 via the register cradle 21. The POS register 20, in accordance with the commodity purchase information that is thus obtained, executes commodity registration by referring to the commodity file (received from the store controller 10 as described above) that is held in memory not illustrated. Thereby, in the POS register 20, the total value in money of goods being purchased is computed in the POS register 20, and the total value in money that is calculated is displayed in the display portion of the POS register 20. When the clerk performs the settlement operation, the settlement processing is performed, the sales performance file is updated, and finally a receipt is issued.

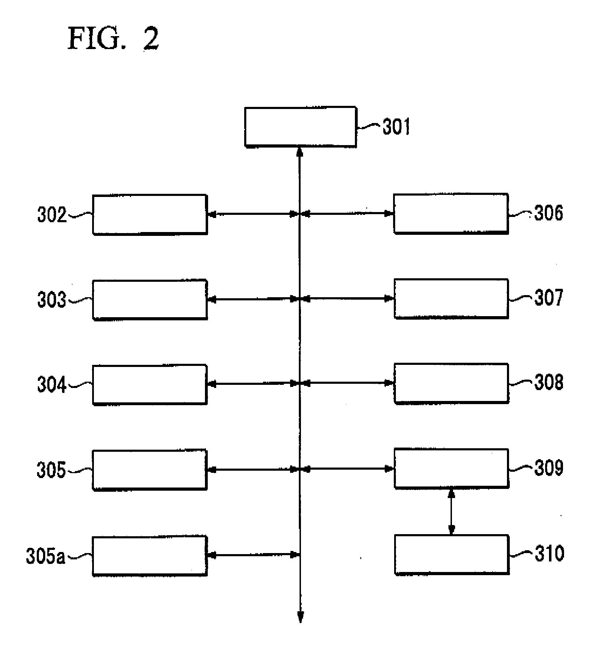

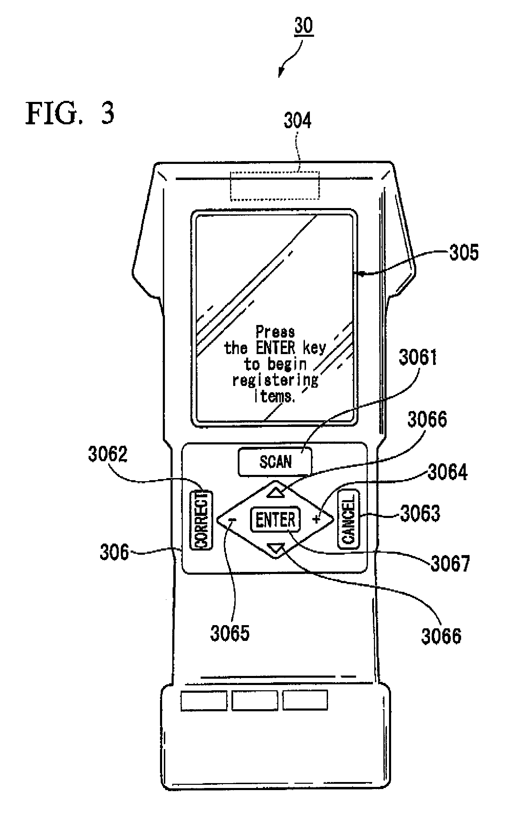

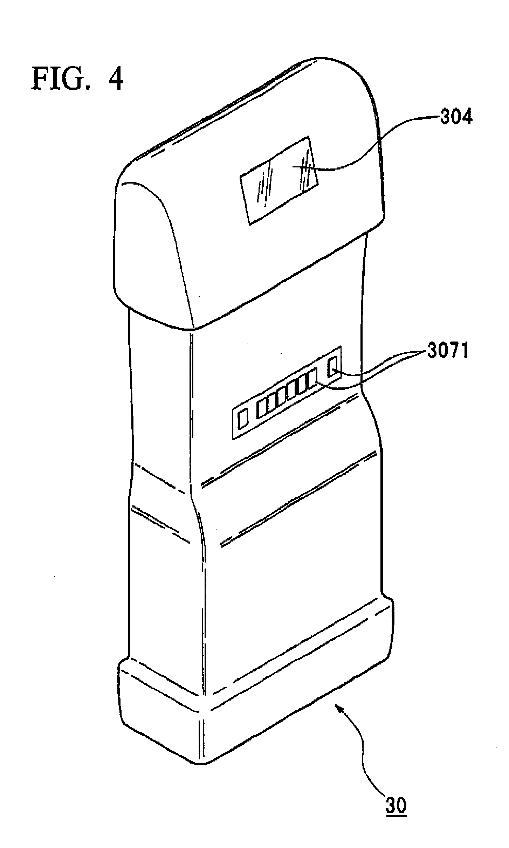

FIG 2 is a block diagram that shows the constitution of the handy terminal 30, and FIG. 3 and FIG 4 are exterior views of the front side and back side, respectively, of the handy terminal 30. Note that the front side is the surface on which a display 305 is provided, and the back side is the surface on the opposite side thereof.

A CPU 301 is a central processing unit, and by reading a program that is stored in a ROM 302 and executing it, controls the operation of the handy terminal 30.

The ROM 302 is a read-only memory that stores the aforementioned program.

A RAM 303 is a random access memory that stores data such as the commodity file that is obtained from, the store controller 10, barcodes of items that are scanned by a scanner portion 304, and its own IP address.

The scanner portion 304 is for reading barcodes that are attached to commodities, shining light on a barcode to read the barcode by the reflected light, and converting the barcode information that is read to data of a predetermined format to be output. Also, in the state of being mounted on the customer cradle 40, when the handy terminal 30 has received the membership number data that is sent from the membership card reader 50 to its unique IP address, it shines light on an optical sensor b7 of the customer cradle 40 similarly to when reading a barcode. This scanner portion 304 is provided on the backside surface of the handy scanner 30, and by bringing a barcode near the scanner portion 304, the scanning operation is performed, The barcode scanning is performed by the customer operation, and the data that is output from the scanner portion 304 is sent to the RAM 303 as data specifying the commodities being purchased, and is stored.

The display 305 displays the name and price of each commodity whose barcode was read by the scanner portion 304, the list of all scanned commodities, the total amount to be paid, number of purchase points, various messages (for example, guidance on how to use for customers who do not know how to use the handy terminal 30) and the like. Also, an LED portion 305a is provided in the upper center portion of the display 305, with the illumination of this LED portion 305a informing the customer which of the plurality of handy terminals 30 that are mounted in the customer cradle 40 is to be used. When the membership number data is received from the aforementioned membership card reader 50, control is performed so that the LED 305a turns on.

The control portion 306 consists of various keys for operating the handy terminal 30. As shown in FIG 3, it has a SCAN key 3061, for starting scanning of a barcode, a CORRECT key 3062 for deleting one at a time commodities whose barcodes have been scanned and correcting the quantities thereof, a CANCEL key for canceling all scanned commodities, a + (plus) key 306 and a - (minus) key for designating the number of commodities to be purchased, up and down arrow keys 3066 for moving up and down the cursor that selects a commodity in the list display of all scanned commodities, and an ENTER key 3067 for selecting an input operation.

A communication portion 307 performs control of data communication between the register cradle 21 and the customer cradle 40. Specifically, when the handy terminal 30 has been connected to the register cradle 21, the data of commodities to be purchased that is stored in the RAM 303 (that is, the data that has been scanned from the barcode of commodities by the scanner portion 304) is sent to the POS register 20 via the register cradle 21. When the handy terminal 30 has been connected to the customer cradle 40, it receives the latest commodity file that is sent from the store controller 10 and the membership number data that is sent from the membership card reader 50. Note that these data communications are carried out in conformance with the RS-232C communication protocol as described above.

Here, the electrical connection between the handy terminal 30 and the register cradle 21 and between the handy terminal 30 and the customer cradle 40 is achieved by connection terminals 3071 that are provided on the back surface of the handy terminal 30. Also, these connection terminals 3071, beside the aforementioned data communication, also have the application of performing charging of a rechargeable battery 310 when connected to the customer cradle 40.

A power supply control portion 309 controls charging of the rechargeable battery 310 by electrical power that is supplied from the customer cradle 40 while the handy terminal 30 is connected to the customer cradle 40.

The rechargeable battery 310 supplies electrical power for driving the components of the handy terminal 30.

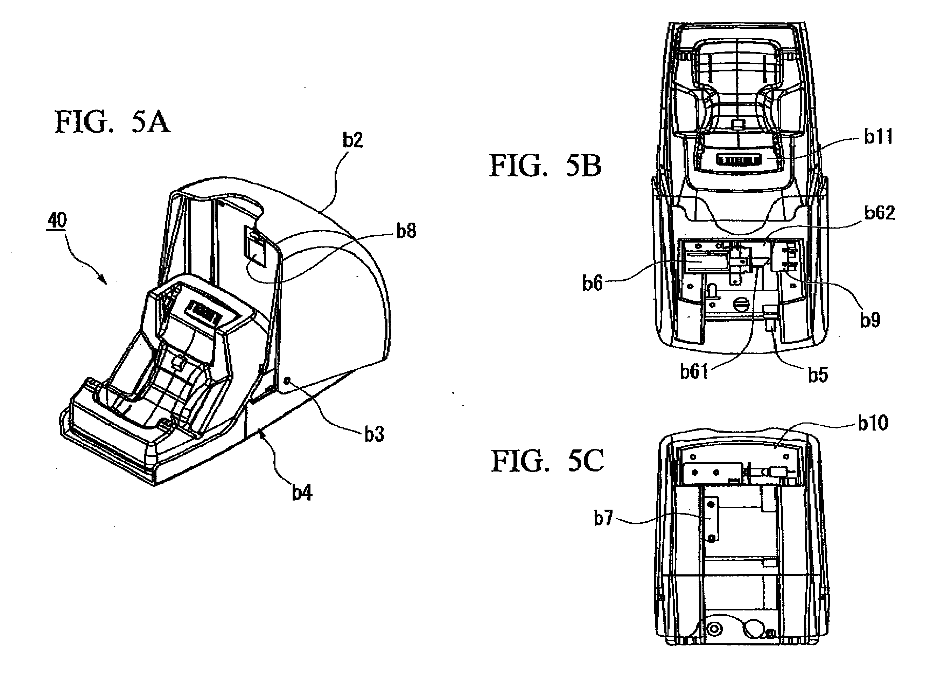

FIGS. 5A to 5C illustrate the customer cradle 40. This customer cradle 40 houses one handy terminal 30 per one customer cradle 40, and in the commodity sales processing system as a whole, a plurality of customer cradles 40 are used in order to house a plurality of handy terminals 30. In FIGS. 5A to 5C, the customer cradle 40 has a mounting base body b4 in which any of the handy terminals 30 is mounted on the upper portion, a cover b2 that is constituted to be capable of opening and closing with this mounting base body b4 and covers the handy terminal 30 that is mounted on the mounting base body b4 when being housed, a lock mechanism b10 that locks the opening/closing of the cover b4 in a closed state, an optical sensor b7 that receives light that is radiated from the scanner portion 304 of the handy scanner 30 (provided behind an optical receiving window b8), and a connection terminal b11 for communication between the handy terminal 30 that is mounted on the mounting base body b4 and the store controller 10 or membership card reader 50 via this customer cradle 40 and for charging of the rechargeable battery 310.

The cover b2 is fixed to the mounting base body b4 so as to freely rotate with an axis b3 serving as a rotation center.

A plunger b61 is biased by an elastic member not illustrated to project out in the Xa direction from a solenoid b6. When the cover b2 is pushed downward by a human hand, a pin b5 that is provided at the lower end portion of the cover b2 moves so as to push away a slope that is provided at the end surface of the plunger b61, pushing the plunger b61 in the Xb direction and entering a lock area b62 while forming a gap. Thereafter, the plunger b61 is pushed back in the Xa direction by the elastic member, and the cover b2 enters the locked state of being closed.

In the state of the cover b2 being closed and the pin b5 being detected by a lock sensor b9, when an optical sensor b7 receives an optical signal (lock release signal), the solenoid 6 is driven.

Then, the plunger b61 is pulled in the Xb direction by the solenoid b6, creating a space that allows passage of the pin b5 between the plunger b61 and the lock sensor b9. The pin b5 leaves the lock area b62 by a biasing force in the opening direction that acts on the cover b2 from an elastic member not illustrated, whereby the cover b2 enters the open state. Note that in the state of the lock sensor b9 not detecting the pin b5, that is, the cover b2 is in a state of not being closed, the solenoid b6 is not driven even if the optical sensor b7 receives an optical signal.

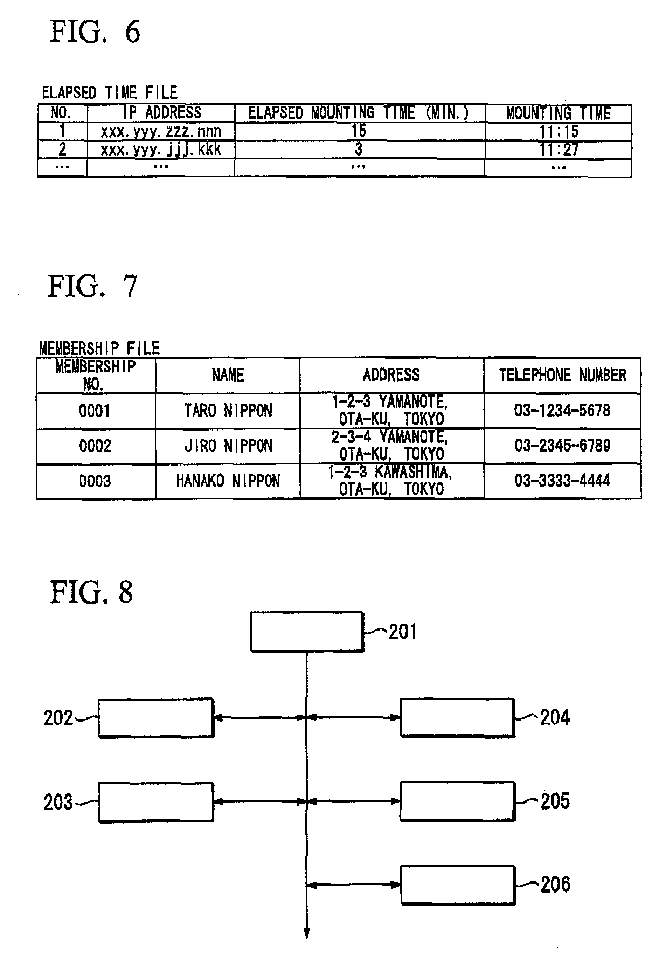

FIG. 6 is an example of an elapsed time file that the membership card reader 50 stores. The elapsed time file keeps track of the passage of time during which each handy terminal 30 is mounted in the customer cradle 40, and consists of various items such as the number of each handy terminal, IP address, elapsed mounting time, mounting time, and the like. For example, for the No.1 handy terminal, the IP address is xxx.yyy.zzz.nnn, the time of being mounted in the customer cradle 40 is 11:15, and the time that has elapsed since mounting is 15 minutes.

FIG 7 is an example of a membership file that the membership card reader 50 stores. The membership file is data in which items such as membership numbers, names, addresses, telephone numbers are expressed in tabular format. For example, for the member with the membership number 0001, the name is Taro Nippon, the address is 1-2-3 Yamanote, Ota-ku, Tokyo, and the telephone number is 03-1234-5678.

FIG. 8 is a block view that shows the constitution of the membership card reader 50. The membership card reader 50 consists of a CPU 201, a ROM 202, a RAM 203, a card reader portion 204, a clock 205, and a communications portion 206.

The CPU 201 is a central processing unit, and by reading a program that is stored in the ROM 202 and executing it, controls the operation of the membership card reader 50. The ROM 202 is a read-only memory that stores the aforementioned program. The RAM 203 is a random access memory that stores the elapsed time file of FIG. 6, the membership file of FIG. 7, and the commodity file that is obtained from the store controller 10. The card reader portion 204 performs reading of membership cards. The clock 205 keeps the current time, and the communications portion 206 performs data communication with the handy terminal 30 via the customer cradle 40.

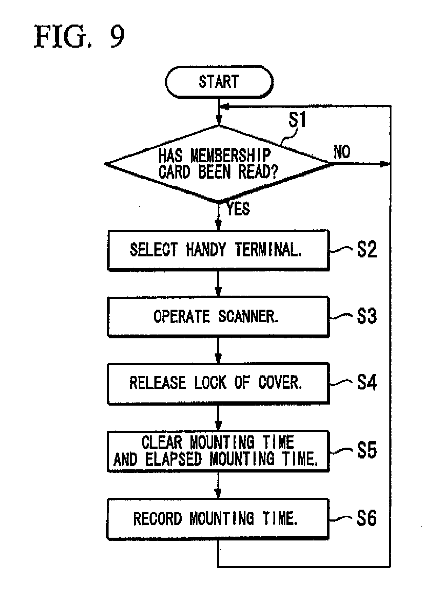

Next, the operation of the present commodity sales processing system shall be described with reference to the flowchart in FIG 9.

In Step S 1, the card reader portion 204 reads the card information when a membership card is inserted into the membership card reader 50, and the CPU 201 determines whether or not it is a valid membership card by referring to the membership file in the RAM 203.

In Step S2, the CPU 201 selects the handy terminal 30 with the longest elapsed time from among the plurality of handy terminals 30 by referring to the elapsed time file in the RAM 203, and sends from the communications portion 206 the membership number data that was read in Step S 1 to the IP address of the chosen handy terminal 30. This membership number data is sent to the handy terminal 30 via the customer cradle 40.

In Step S3, the handy terminal 30 receives the membership number data that was sent in Step S2 and transmits an optical signal (lock release signal) from the scanner portion 304. Also, the handy terminal 30 causes the LED 305a to emit light, and displays the membership number data that was received on the display 305.

In Step S4, when the optical sensor b7 of the customer cradle 40 receives the optical signal that is emitted from the handy terminal 30, the solenoid b6 operates to release the lock of the closed state of the cover b2, and thereby puts the cover b2 in an open state. As a result, a state arises in which the handy terminal 30 can be taken out. The customer finds the handy terminal 30 to be used by confirming the lighting of the LED 305a and the membership number display in the display 305 that were performed in Step S3. The customer then removes that handy terminal 30 from the customer cradle 40 and commences shopping.

In Step S5, the CPU 201 of the membership card reader 50 detects that the handy terminal 30 has been removed from the customer cradle 40 by the loss of contact between the connection terminals 3071 of the handy terminal 30 and a connection terminal b11 of the customers cradle 40 by monitoring the IP address of the handy terminal 30, and clears the elapsed mounting time and mounting time corresponding to the handy terminal 30 that has been removed in the elapsed time file of the RAM 203.

In Step S6, a customer that has finished shopping returns the handy terminal 30. When the handy terminal 30 is mounted in the customer cradle 40, the connection terminal b11 of the customer cradle b11 and the connection terminals 3071 of the handy terminal 30 make contact, whereby charging is performed via the connection terminals. Also, the CPU 201 of the membership card reader 50 detects the contact of the connection terminals by monitoring the IP address, and records the present time as the mounting time in the elapsed time file of the RAM 203.

As described above, when the handy terminal 30 receives the membership number data that is sent from the membership card reader 50 in the case of a valid membership card, the handy terminal 30 transmits an optical signal (lock release signal), and the customer cradle 40, upon receiving the lock release signal from the handy terminal 30, releases the lock of the handy terminal 30. Therefore, the customer cradle 40 can put the handy terminal 30 in a removable state without communication with the membership card reader 50.

One embodiment of the present invention was described in detail referring to the drawings, but a specific constitution is not limited to the foregoing description, with various design modifications being possible within the scope of not departing from the gist of the present invention.

For example, the customer cradle 40 can use a buzzer sound, electrical signal or wireless signal instead of using an optical signal for releasing the lock of the cover b2.

Also, the lock unit of the customer cradle 40 was in the form of the cover b2, but is not limited thereto, and may be a lock unit with any structure provided it is one that mechanically prevents removal of the handy terminal 30.

Also, when a membership card is read, the membership number data that is sent to the handy terminal 30 may be transmitted from the store controller 10 and not from the membership card reader 50.

Also, a simple operation button may be provided instead of the membership card reader 50, so that when a customer presses this operation button, a signal for releasing the lock of the customer cradle 40 is transmitted from a communication device that is provided with this operation button to the (whichever) handy terminal 30. Thereby, it is possible to allow even a customer who does not have a membership card to use the handy terminal 30.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A commodity sales processing system in which a customer operates a portable terminal at a commodity display place to read out and store commodity codes and settlement at a cash register is performed based on this stored data, comprising:
the portable terminal; a housing device that houses the portable terminal; an operation part that is capable of communicating with the portable terminal and is controlled to take out the portable terminal that is housed in the housing device; and a sending unit that sends a confirmation signal to the portable terminal that is housed in the housing device in the case of the operation part being operated;
wherein, the portable terminal is provided with a signal transmission unit that transmits a lock release signal upon receiving the confirmation signal from the sending unit; and
the housing device is provided with a look unit that prevents removal of the portable terminal in the mounted state; a receiving unit that receives the lock release signal from the portable terminal that is prevented from being removed by the lock unit; and a lock release unit that releases the lock unit upon receiving the lock release signal from the receiving unit.

2. The commodity sales processing system according to claim 1, wherein
the lock unit is a cover that covers the portable terminal in the locked state and is biased so as to open in the released state.

3. The commodity sales processing system according to claim 1, wherein
the portable terminal is provided with a code reading portion that shines a light on the code attached to a commodity and reads the code by the reflected light, and
the signal transmission unit transmits the look release signal by light that is emitted from the code reading portion.

4. The commodity sales processing system according to claim 3, wherein
the lock unit is a cover that covers the portable terminal in the locked state and is biased so as to open in the released state.
